# EUROPÄISCHE PATENTSCHRIFT

(11) **EP 4 353 592 B1**
(45) Veröffentlichungstag und Bekanntmachung des Hinweises auf die Patenterteilung: **09.07.2025**
(21) Anmeldenummer: 23201505.7
(22) Anmeldetag: 04.10.2023
(51) Int. Cl.: B64D 11/06, B64D 17/30

(54) **GURTZEUG**
HARNESS
HARNAIS

(30) Priorität: 11.10.2022 DE 102022126284
(43) Veröffentlichungstag der Anmeldung: 17.04.2024
(73) Patentinhaber: Autoflug GmbH, 25462 Rellingen (DE)
(72) Erfinder: Reichard, Karsten, 25358 Horst (DE); Rieken, Yve, 25436 Tornesch (DE)
(74) Vertreter: Feucker, Max Martin

(56) Entgegenhaltungen:
- EP-B1- 0 727 346
- EP-B1- 1 243 485
- DE-A1- 102007 016 438
- GB-A- 1 025 161
- GB-A- 1 437 086
- US-A- 1 899 656

## Beschreibung

Die vorliegende Erfindung betrifft ein Gurtzeug, welches zwei Schultergurte, zwei Beckengurte, genau einen Schrittgurt und genau ein zentrales Gurtschloss umfasst, wobei die Gurte über das zentrale Gurtschloss fixierbar und lösbar sind.

Ein solches Gurtzeug kann beispielsweise als Klettergurtzeug und Absturzsicherung dienen. Bei den Klettergurtzeugen sind aus dem Stand der Technik auch Gurtzeuge bekannt, die keinen Schrittgurt aufweisen und stattdessen Beingurte aufweisen, die jeweils einzeln um einen Oberschenkel herumgeführt sind und somit eine Schlaufe um den Oberschenkel ausbilden. In diesem Fall müssen beide Beingurte separat geöffnet und geschlossen werden.

Ein solches Gurtzeug kann aber auch Bestandteil einer Trage und insbesondere einer Krankentrage sein und somit zur Sicherung eines Patienten beim Transport dienen. Die aus dem Stand der Technik bekannten Gurtzeuge einer Trage weisen in der Regel jedoch keinen Schrittgurt auf, so dass alle Gurte von den Seiten der Trage auf einen Patienten auf der Trage anlegbar sind und mittels des zentralen Gurtschlosses miteinander verbindbar sind. Soweit ein aus dem Stand der Technik bekanntes Gurtzeug für eine Krankentrage neben den Beckengurten auch Beingurte aufweist, so werden diese Beingurte jeweils separat und einzeln mit einer Schlosszunge an ihren Enden in das zentrale Gurtschloss eingesteckt.

Ein weiteres Anwendungsgebiet eines solchen Gurtzeuges ist ein Fallschirmsystem, bei dem die Enden der Gurte an einem den Fallschirm aufnehmenden Fallschirmmodul befestigt sind. Auch bei aus dem Stand der Technik bekannten Fallschirmsystemen ist in der Regel kein einzelner Schrittgurt vorgesehen. Vielmehr sind Beingurte bekannt, die jeweils um einen Oberschenkel eines Benutzers gelegt werden und jeweils mit einem eigenen Verschluss an die Beine eines Benutzers angelegt werden. Die Beingurte sind in diesem letzteren Fall also nicht mittels des zentralen Gurtschlosses fixier- und lösbar. Zudem verläuft in diesem Fall der jeweilige Beingurt als Schlaufe um den Oberschenkel eines Benutzers herum.

Ein Gurtzeug wird in GB1437086A offenbart: ein kombiniertes Halte- und Fallschirmgurtzeug zur Befestigung an einem Flugzeugsitz, insbesondere einem Schleudersitz, umfasst linke und rechte Schultergurte, die jeweils einstellbar und verriegelbar von einer Verbundschnalle im Bereich der zugehörigen Schulter aufgenommen werden, vordere und hintere linke und rechte Fallschirmbefestigungsgurte, die im Betrieb von den Verbundschnallen aufsteigen; Y-förmige Schrittgurte, die an den hinteren Fallschirmgurten und an der Rückseite der Schultergurte befestigt sind, und ein Gurtschloss zur lösbaren Befestigung der Gurte miteinander. Die hinteren Fallschirmgurte sind als ein einziger Gurt ausgebildet, der eine Gesäßstütze bildet, und die vorderen Fallschirmgurte sind durchgehend mit den jeweiligen Schultergurten verbunden, die sich auf dem Rücken des Trägers kreuzen, wobei die kombinierten Schulter-/ Fallschirmgurte und jeweils eine Schnalle tragen, die einen Bauchgurt zur Befestigung an dem Gurtschloss verstellbar aufnimmt. Der Basisarm jedes Schnittgurtes geht durch einen Ring an einem Beckengurt, und das andere Ende des Beckengurts wird verstellbar in einer Schnalle an einem Gurt aufgenommen. Der Gurt trägt Sitzbefestigungselemente, und das Gurtzeug ist auch über Bänder, die über Rollen an den Schnallen verlaufen, und über einen Negativgurt, der an dem Gurtschloss befestigt ist, am Sitz befestigt. Weitere relevante Beispiele des Stands der Technik sind in den folgenden Dokumenten enthalten: US1899656A, DE102007016438A1, EP1243485A2, EP0727346A2 und GB1025161A.

Die Erfindung betrifft insbesondere einen Sicherheitssitz für ein Fahrzeug und insbesondere für ein Luftfahrzeug, wie Helikopter oder Flugzeug, mit einem Gurtzeug, wobei die jeweiligen Enden der Gurte an dem Sicherheitssitz befestigt sind. Ein Sicherheitssitz mit dem eingangs genannten Gurtzeug ist als Fünf-Punkt-Gurt bekannt, bei dem die zwei Schultergurte, die Beckengurte und der eine Schrittgurt in dem zentralen Gurtschloss zusammenführbar sind. In der Regel ist das Gurtschloss dabei unlösbar an dem Schrittgurt befestigt, wobei die Schultergurte und die Beckengurte mit jeweils einer an ihren Enden angebrachten Schlosszunge in das Gurtschloss einsteckbar sind. Im Bereich der Sicherheitssitze, insbesondere im automobilen Rennsport, ist zudem aus dem Stand der Technik bekannt, dass die Gurtzeuge anstatt eines Schrittgurtes zwei Beingurte aufweisen, die jeweils von dem Beckengurt entlang der Unterseite des Oberschenkels zurück zum Beckengurt geführt sind, so dass die Beingurte eine Schlaufe um den jeweiligen Oberschenkel ausbilden.

Aufgabe der vorliegenden Erfindung ist es, ein Gurtzeug bereitzustellen, welches einfach an- und ablegbar ist und welches die Oberschenkel eines Benutzers sicher und zuverlässig fixiert.

Eine Lösung für die Aufgabe ist mit dem Gurtzeug mit den Merkmalen des unabhängigen Anspruchs angegeben. Weitere Lösungen und vorteilhafte Weiterbildungen sind in der vorstehenden und nachfolgenden Beschreibung angegeben, wobei einzelne Merkmale der vorteilhaften Weiterbildungen in technisch sinnvoller Weise miteinander kombinierbar sind.

Gelöst wird die Aufgabe bevorzugt durch ein Gurtzeug, welches zwei Schultergurte, zwei Beckengurte, einen Schrittgurt und genau ein zentrales Gurtschloss umfasst, über welches die Gurte fixierbar und lösbar sind, wobei das Gurtzeug zwei Beingurte umfasst, die im Tragezustand jeweils über eine Oberseite eines Oberschenkels eines Benutzers verlaufen und mittels des genau einen Gurtschlosses fixierbar und lösbar sind.

Das Gurtzeug umfasst insbesondere genau ein zentrales Gurtschloss, welches im Tragezustand, also in einem angelegten Zustand des Gurtzeuges, vor der Brust oder dem Bauch eines Benutzers, insbesondere oberhalb der Hüfte, zentral angeordnet ist.

Gelöst wird die Aufgabe also insbesondere durch ein Gurtzeug, welches zwei, insbesondere genau zwei Schultergurte umfasst, welche also in einem angelegten Zustand (Tragezustand) von dem zentralen Gurtschloss jeweils über die Brust und den Nacken-/Schulterbereich eines Benutzers verlaufen. Das Gurtzeug umfasst also insbesondere zwei Schultergurte, zwei Beckengurte, einen Schrittgurt und genau ein zentrales Gurtschloss.

Das Gurtzeug umfasst ferner die zwei, insbesondere genau zwei Beckengurte, welche im Tragezustand von dem zentralen Gurtschloss jeweils entlang des Beckens des Benutzers seitlich und gegebenenfalls nach hinten verlaufen.

Zudem umfasst das Gurtzeug den genau einen Schrittgurt, welcher im Tragezustand von dem zentralen Gurtschloss nach unten zwischen den Beinen verläuft.

Das Gurtschloss dient zur Fixierung der Gurte im Tragezustand. Es kann dabei vorgesehen sein, dass die Gurte jeweils einzeln, beispielsweise mit einer Gurtzunge an ihren Enden, an dem Gurtschloss fixierbar sind. Es kann aber auch vorgesehen sein, dass beispielsweise zwei Gurte, wie beispielsweise die Schultergurte, an einer Schlosszunge zusammengeführt sind und somit gemeinsam an dem Gurtschloss fixierbar sind. Zudem kann vorgesehen sein, dass das Gurtschloss an einem der Gurte, insbesondere an dem Schrittgurt unlösbar angebracht ist. Die Gurte sind also insbesondere mittels in das Gurtschloss einsteckbarer Gutzungen an dem Gurtschloss fixierbar. Es ist somit möglich, die lösbar mit dem Gurtschloss verbundenen Gurte mit nur einer Handbewegung zur Betätigung des Gurtschlosses zu lösen.

Es wird nun weiter vorgeschlagen, dass das Gurtzeug zwei Beingurte umfasst, die im Tragezustand jeweils über eine Oberseite eines Oberschenkels eines Benutzers verlaufen und mittels des genau einen Gurtschlosses fixierbar und lösbar sind.

Mit anderen Worten: Die Erfindung sieht in ihrem Grundgedanken vor, dass das Gurtzeug zusätzlich zu dem einen Schrittgurt zwei Beingurte umfasst, die im Tragezustand ebenfalls zumindest indirekt mittels des einen zentralen Gurtschlosses fixiert sind und die im Tragezustand über die Vorderseite eines Oberschenkels des Benutzers verlaufen. Es wird somit vermieden, dass ein Gurt unterhalb des Oberschenkels eines Benutzers verläuft, wodurch der Tragekomfort erhöht ist. Ferner ist eine einfache Handhabung gegeben, da auch die beiden Beingurte mittels des einen zentralen Gurtschlosses zumindest indirekt im Tragezustand fixiert sind.

Das erfindungsgemäße Gurtzeug wird insbesondere mit einem Sicherheitssitz für ein Fahrzeug eingesetzt, wobei bevorzugt jeweils ein Ende der Gurte an dem Sicherheitssitz befestigt ist. So sind beispielsweise die Schultergurte an einer Rückenlehne des Sicherheitssitzes befestigt oder verlaufen über die obere Seite der Rückenlehne zu einem Befestigungspunkt auf der Rückseite am unteren Ende des Sicherheitssitzes. Die Beckengurte sind bevorzugt in einem unteren Bereich der Rückenlehne oder in einem Übergangsbereich zur Sitzfläche an dem Sicherheitssitz befestigt oder auf eine Rückseite des Sicherheitssitzes geführt und dort befestigt. Der Schrittgurt ist insbesondere zentral an der Sitzfläche des Sicherheitssitzes befestigt oder zentral durch die Sitzfläche hindurchgeführt. Die Beingurte sind hingegen am seitlichen Rand der Sitzfläche des Sicherheitssitzes befestigt oder entlanggeführt und erstrecken sich im Tragezustand insbesondere von einer Knieaußenseite über die Oberseite des Oberschenkels zum Gurtschloss. Somit wird ein Sieben-Punkt-Gurtzeug ausgebildet.

In einem weiteren Anwendungsfall wird das erfindungsgemäße Gurtzeug mit einer Trage, insbesondere mit einer Krankentrage eingesetzt. In diesem Fall sind die zwei Schultergurte, die zwei Beckengurte und der Schrittgurt sowie die zwei Beingurte mit ihren Enden an der Trage befestigt. Die Gurte sind dabei so an der Trage befestigt, dass sich die zwei Schultergurte über die Brust eines auf der Trage befindlichen Benutzers und über seinen Nacken/ seine Schultern erstrecken, während die zwei Beckengurte sich entlang des Beckens erstrecken. Der Schrittgurt ist so an der Trage festgelegt, dass er sich zwischen die Beine eines sich auf der Trage befindlichen Benutzers im Tragezustand erstreckt. Die Beingurte sind hingegen an einem seitlichen Rand der Trage befestigt, so dass sich die Beingurte im angelegten Tragezustand von der Außenseite der Trage über eine Oberseite des Oberschenkels erstrecken.

In einem weiteren Anwendungsfall wird das Gurtzeug mit einem Fallschirmsystem benutzt, welches ein Fallschirmmodul aufweist, wobei in dem Fallschirmmodul der Fallschirm verstaut ist. Das Gurtzeug ist mit seinen Gurten entsprechend an dem Fallschirmmodul befestigt, wobei das Fallschirmmodul insbesondere eine sitzartige Struktur umfasst, an welcher die Gurte befestigt sind.

Die zwei Beingurte haben dabei die Funktion, die Oberschenkel auf der Sitzfläche/Liegefläche in vertikaler Richtung zu halten, wodurch die Relativbewegung zwischen den Oberschenkeln des Benutzers zur Sitzfläche/Liegefläche so gering wie möglich gehalten werden kann. Wenn die Beingurte im Tragezustand nicht fest angezogen sind, kann alternativ auch eine maximale Bewegung des Oberschenkels gegenüber der Sitzfläche/Liegefläche durch die Beingurte eingestellt werden.

Die Beingurte erstrecken sich im Tragezustand insbesondere von einer Knieaußenseite über die Oberseite des Oberschenkels zum Gurtschloss.

Zum Anlegen des Gurtzeuges werden die Gurte beispielsweise mit an den freien Enden der Gurte angebrachten Schlosszungen in das zentrale Gurtschloss eingesteckt.

Prinzipiell kann vorgesehen sein, dass die beiden Beingurte jeweils einzeln mit ihrem freien Ende mit dem zentralen Gurtschloss beispielsweise mittels einer Schlosszunge lösbar verbindbar sind.

In einer bevorzugten Ausführungsform ist vorgesehen, dass die Beingurte jeweils mit einem Ende an einem der Beckengurte angebracht sind. Bevorzugt ist jeder Beingurt mit seinem Ende an dem Endbereich des zugehörigen Beckengurtes angebracht, mit welchem der Beckengurt mit dem Gurtschloss verbindbar ist. Insbesondere ist die Verbindung zwischen dem Beckengurt und dem Beingurt nicht mehr als 10 cm, bevorzugt nicht mehr als 5 cm von dem Ende des Beckengurtes entfernt, mit dem der Beckengurt mit dem Gurtschloss verbindbar ist. Auf diese Weise kann der jeweilige Beingurt mit dem zugehörigen Beckengurt einfach mittels beispielsweise genau einer Schlosszunge an dem Gurtschloss fixiert werden, während gleichzeitig sichergestellt ist, dass sich der Beingurt im Tragezustand über die Oberseite des Oberschenkels des Benutzers erstreckt. Somit kann das Gurtzeug noch schneller und zuverlässiger angelegt werden. Zudem können die Beckengurte und die daran angebrachten Beingurte mit nur einer Bewegung mit dem Gurtschloss verbunden werden. Es wird somit auch gewährleistet, dass nicht vergessen wird, die Beingurte anzulegen. Ein bekanntes Fünf-Punkt-Gurtzeug kann mittels solchen Beingurten einfach zu einem Sieben-Punkt-Gurtzeug nachgerüstet werden.

Um das Gurtzeug einfach an unterschiedlich große Benutzer anpassen zu können, ist vorgesehen, dass die Beingurte längenverstellbar sind.

Zentrale Gurtschlösser sind als solche aus dem Stand der Technik bekannt. In einer bevorzugten Ausführungsform sind die freien Enden der Schultergurte und der Beckengurte unter Verwendung von Verbindungselementen, wie beispielsweise Schlosszungen, in das Gurtschloss einsteckbar. Das zentrale Gurtschloss ist unlösbar mit dem Schrittgurt verbunden. Die Beingurte sind in diesem Fall an den Beckengurten angebracht, beispielsweise angenäht.

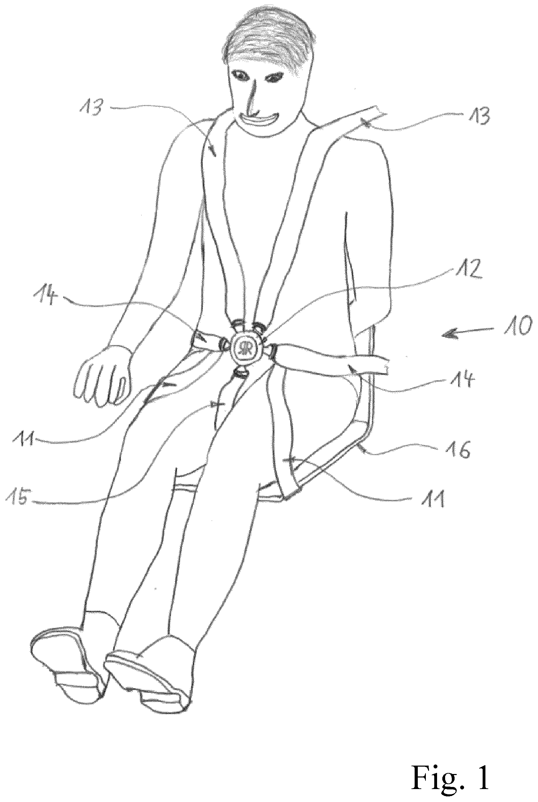

Die Erfindung sowie das technische Umfeld werden im Folgenden anhand der Figur beispielhaft erläutert.

Die Figur zeigt schematisch einen Sicherheitssitz 16 mit einem Gurtzeug 10, welches in einem Tragezustand an einem Benutzer angelegt ist.

Das Gurtzeug 10 umfasst ein zentrales Gurtschloss 12, welches im Tragezustand vor dem Bauch des Benutzers oberhalb seiner Hüften angeordnet ist.

Das Gurtzeug 10 umfasst zudem zwei Schultergurte 13, die an einer Rückenlehne des Sicherheitssitzes 16 befestigt sind und sich jeweils über den Nacken und die Brust des Benutzers zu dem Gurtschloss 12 erstrecken. Die Schultergurte 13 sind jeweils einzeln mittels einer Schlosszunge in das Gurtschloss 12 eingesteckt, kann aber auch unlösbar mit dem Gutschloss 12 verbunden sein.

Das Gurtzeug 10 umfasst zudem einen Schrittgurt 15, welcher in einem zentralen Bereich des Sitzbereichs des Sicherheitssitzes 16 befestigt ist und sich zwischen den Beinen des Benutzers zu dem Gurtschloss 12 erstreckt. Der Schrittgurt 15 ist mit einer Schlosszunge in das Gurtschloss 12 eingesteckt.

Das Gurtzeug 10 umfasst zudem zwei Beckengurte 14, die jeweils im seitlichen unteren Bereich der Rückenlehne des Sicherheitssitzes 16 befestigt sind und sich entlang des Beckens des Benutzers zu dem Gurtschloss 12 erstrecken. Die Beckengurte 14 sind jeweils mit einer Schlosszunge in das Gurtschloss 12 eingesteckt.

Das Gurtzeug 10 umfasst zudem zwei Beingurte 11, die im vorderen seitlichen Bereich des Sitzbereichs an dem Sicherheitssitz 16 befestigt sind. Die Beingurte 11 erstrecken sich jeweils von dem seitlichen Sitzbereich entlang der Außenseite eines Knies über die Oberseite eines Oberschenkels des Benutzers zu jeweils einem Beckengurt 14, wo die Beingurte 11 an dem jeweiligen Beckengurt 14 angebracht sind. Die Beingurte 11 sind an dem Ende des Beckengurtes 14 befestigt, an dem der jeweilige Beckengurt 14 mit dem Gurtschloss 12 verbunden ist. Die Beingurte 11 können somit gleichzeitig mit dem jeweiligen Beckengurt 14 an dem Gurtschloss 12 fixiert werden, wobei sich die Beingurte 11 im fixierten Zustand über die Oberseite des Oberschenkels des Benutzers erstrecken. Somit können die Beingurte 11 nicht nur schnell gemeinsam mit den Beckengurten 14 angelegt werden, sondern befinden sich nach dem Anlegen auch in der gewünschten Anordnung zum Benutzer.

### Bezugszeichenliste

- 10: Gurtzeug
- 11: Beingurt
- 12: Gurtschloss
- 13: Schultergurt
- 14: Beckengurt
- 15: Schrittgurt
- 16: Sicherheitssitz

## Patentansprüche

1. Gurtzeug (10), umfassend
- zwei Schultergurte (13),
- zwei Beckengurte (14),
- genau einen Schrittgurt (15) und
- genau ein zentrales Gurtschloss (12), über welches die Gurte (11, 13, 14, 15) fixierbar und lösbar sind,
wobei
das Gurtzeug (10) zwei Beingurte (11) umfasst, die im Tragezustand jeweils über eine Oberseite eines Oberschenkels eines Benutzers verlaufen und mittels des genau einen Gurtschlosses (12) fixierbar und lösbar sind und wobei jeweils ein Ende der Gurte (11, 13, 14, 15) an einem Sitz (16), an einer Trage oder an einem Fallschirmmodul befestigbar ist.

2. Gurtzeug (10) nach Anspruch 1, wobei die Beingurte (11) jeweils mit einem Ende an einem Beckengurt (14) angebracht sind.

3. Gurtzeug (10) nach einem der vorhergehenden Ansprüche, wobei die Beingurte (11) längenverstellbar sind.

4. Gurtzeug (10) nach einem der vorhergehenden Ansprüche, wobei freie Enden der Schultergurte (13) und der Beckengurte (14) mit dem Gurtschloss (12) lösbar verbindbar sind.

5. Gurtzeug (10) nach Anspruch 4, wobei ein Ende des Schrittgurtes (15) mit dem Gurtschloss (12) lösbar verbindbar oder permanent verbunden ist.

6. Sicherheitssitz (16) für ein Fahrzeug mit einem Gurtzeug (10) nach einem der vorhergehenden Ansprüche.

7. Sicherheitssitz (16) nach Anspruch 6, wobei jeweils ein Ende der Gurte (11, 13, 14, 15) an dem Sicherheitssitz (16) befestigt ist.

8. Trage mit einem Gurtzeug nach einem der vorhergehenden Ansprüchen 1 bis 5, wobei jeweils ein Ende der Gurte (11, 13, 14, 15) an der Trage befestigt ist.

9. Fallschirmsystem mit einem Fallschirmmodul und einem Gurtzeug nach einem der vorhergehenden Ansprüche 1 bis 5, wobei jeweils ein Ende der Gurte (11, 13, 14, 15) an dem Fallschirmmodul befestigt ist.

## Claims

1. A belt harness (10), comprising
- two shoulder belts (13),
- two lap belts (14),
- precisely one crotch belt (15), and
- precisely one central belt buckle (12), with which the belts (11, 13, 14, 15) can be fastened and released,
wherein
the belt harness (10) comprises two leg belts (11), which when worn each run over an upper side of thigh of a user, and can be fastened and released by means of the precisely one belt buckle (12), and wherein one respective end of the belts (11, 13, 14, 15) can be attached to a seat (16), to a stretcher or to a parachute module.

2. The belt harness (10) according to claim 1, wherein the leg belts (11) are each secured at one end to a lap belt (14).

3. The belt harness (10) according to one of the preceding claims, wherein the leg belts (11) have an adjustable length.

4. The belt harness (10) according to one of the preceding claims, wherein free ends of the shoulder belts (13) and the lap belts (14) can be releasably connected with the belt buckle (12).

5. The belt harness (10) according to claim 4, wherein an end of the lap belt (15) can be releasably connected or is permanently connected with the belt buckle (12).

6. A safety seat (16) for a motor vehicle with a belt harness (10) according to one of the preceding claims.

7. The safety seat (16) according to claim 6, wherein a respective end of the belts (11, 13, 14, 15) is secured to the safety seat (16).

8. A stretcher with a belt harness according to one of the preceding claims 1 to 5, wherein a respective end of the belts (11, 13, 14, 15) is secured to the stretcher.

9. A parachute system with a parachute module and a belt harness according to one of the preceding claims 1 to 5, wherein a respective end of the belts (11, 13, 14, 15) is secured to the parachute system.

## Revendications

1. Dispositif de ceinture (10), comprenant :
- deux ceintures d'épaule (13),
- deux ceintures de bassin (14),
- exactement une ceinture d'entrejambe (15) et
- exactement un verrou de ceinture central (12) par lequel les ceintures (11, 13, 14, 15) peuvent être fixées et détachées,
dans lequel
le dispositif de ceinture (10) présente deux ceintures de jambe (11) qui passent respectivement sur un dessus d'une cuisse d'un utilisateur dans l'état porté et peuvent être fixées et détachées au moyen du exactement un verrou de ceinture (12) et dans lequel respectivement une extrémité des ceintures (11, 13, 14, 15) peut être fixée sur un siège (16), sur une civière ou sur un module de parachute.

2. Dispositif de ceinture (10) selon la revendication 1, dans lequel les ceintures de jambe (11) sont placées sur une ceinture de bassin (14) respectivement par une extrémité.

3. Dispositif de ceinture (10) selon l'une des revendications précédentes, dans lequel les ceintures de jambe (11) sont réglables en longueur.

4. Dispositif de ceinture (10) selon l'une des revendications précédentes, dans lequel des extrémités libres des ceintures d'épaule (13) et des ceintures de bassin (14) peuvent être reliées de manière détachée au verrou de ceinture (12).

5. Dispositif de ceinture (10) selon la revendication 4, dans lequel une extrémité de la ceinture d'entrejambe (15) peut être reliée en pouvant être détachée ou reliée de manière permanente au verrou de ceinture (12).

6. Siège de sécurité (16) pour un véhicule comprenant un dispositif de ceinture (10) selon l'une des revendications précédentes.

7. Siège de sécurité (16) selon la revendication 6, dans lequel respectivement une extrémité des ceintures (11, 13, 14, 15) est fixée au siège de sécurité (16).

8. Civière comprenant un dispositif de ceinture selon l'une des revendications 1 à 5, dans lequel respectivement une extrémité des ceintures (11, 13, 14, 15) est fixée sur la civière.

9. Système de parachute comprenant un module de parachute et un dispositif de ceinture selon l'une des revendications précédentes 1 à 5, dans lequel respectivement une extrémité des ceintures (11, 13, 14, 15) est fixée sur le module de parachute.
